# EUROPÄISCHE PATENTANMELDUNG

(11) **EP 1 422 246 A2**
(43) Veröffentlichungstag der Anmeldung: **26.05.2004**
(21) Anmeldenummer: 03026650.6
(22) Anmeldetag: 19.11.2003
(51) Int. Cl.: C08F 8/00, C08G 81/02

(54) **Polyisobutenylether und -thioether**

(30) Priorität: 25.11.2002 DE 10254924
(71) Anmelder: BASF AG, 67056 Ludwigshafen (DE)
(72) Erfinder: Lange, Arno, 67098 Bad Dürkheim (DE); Mach, Helmut, 69115 Heidelberg (DE); Rath, Hans Peter, 67269 Grünstadt (DE); Mijolovic, Darijo, 68309 Mannheim (DE)
(74) Vertreter: Reitstötter - Kinzebach

(57) **Zusammenfassung**

Beschrieben wird ein Verfahren zur Herstellung von Polyisobutenyl(thio)ethern durch Umsetzung eines wenigstens eine terminale Epoxidgruppe aufweisenden Polyisobutenepoxids mit sich selbst, mit anderen Epoxiden, und/oder unter Alkoholen und Thiolen ausgewählten Nucleophilen unter Katalyse einer Lewis-sauren Verbindung, und/oder eines kationischen Photoinitiators unter Belichtung. Die Nebenreaktion der Umlagerung des Epoxids zum Polyisobutenylaldehyd ist unterdrückt. Außerdem wird eine härtbare Zusammensetzung beschrieben, umfassend ein Polyisobutenepoxid, ein davon verschiedenes Epoxid, und gegebenenfalls ein Poly(thi)ol.

## Beschreibung

### Beschreibung

Die vorliegende Erfindung betrifft ein Verfahren zur Herstellung von Polyisobutenylethern und -thioethern (im Folgenden kollektiv als "Polyisobutenyl(thio)ether" bezeichnet) ausgehend von einem Polyisobutenylepoxid sowie die nach dem Verfahren erhältlichen Polyisobutenyl(thio)ether.

Die Ringöffnung von Epoxiden mit Nucleophilen wie Aminen, Alkoholen oder Thiolen unter saurer Katalyse läuft üblicherweise einfach und exotherm ab, wobei je nach gewähltem Nucleophil Hydroxyalkylamine, -ether oder -thioether erhalten werden. Höher substituierte Epoxide wie Polyisobutenepoxide lagern sich unter diesen Bedingungen allerdings in der Regel zum Aldehyd um.

Die EP-A 0 476 485 beschreibt die Umsetzung von Polyisobutenylepoxiden mit Aminen oder Alkanolaminen. Dabei erfolgt eine nucleophile Öffnung des Epoxidrings durch das Stickstoffatom des Amins oder des Alkanolamins und es werden Polyisobutenylaminoalkohole erhalten.

Die WO 00/63257 beschreibt die Umwandlung von Polyisobutenylepoxiden zu Aldehyden mittels saurer Katalysatoren wie Zinkbromid oder einem Gemisch von Schwefelsäure und Phosphorsäure.

Die Erfindung betrifft ein Verfahren zur Herstellung von Polyisobutenyl(thio)ethern durch Umsetzung eines wenigstens eine terminale Epoxidgruppe aufweisenden Polyisobutenepoxids mit
i) sich selbst,
ii) anderen Epoxiden, und/oder
iii) unter Alkoholen und Thiolen ausgewählten Nucleophilen,
unter Katalyse
a) einer Lewis-sauren Verbindung, und/oder
b) eines kationischen Photoinitiators unter Belichtung.

Vorzugsweise weist das Polyisobutenepoxid eine der Formeln Ia bis Id auf 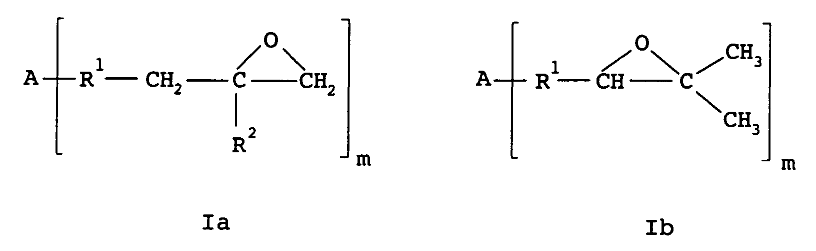 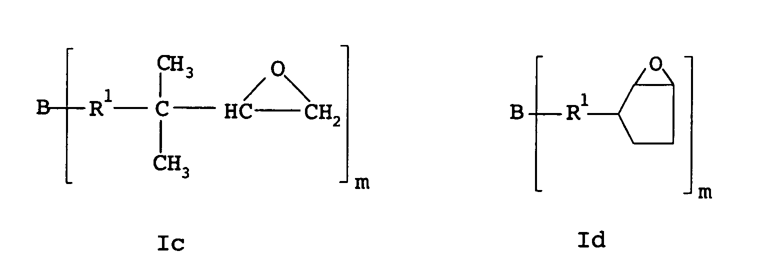 worin A für Wasserstoff oder den Rest eines Inifermoleküls steht, B für Chlor oder den Rest eines Kopplungsmittels steht, R¹ für eine Isobuteneinheiten aufweisende Kette steht, R² für Wasserstoff oder Methyl steht und m für eine ganze Zahl von 1 bis 6, vorzugsweise 1, 2 oder 3, steht.

Das Polyisobutenepoxid weist vorzugsweise ein Molekulargewicht von 200 bis 50000, vorzugsweise 1000 bis 10000, auf.

Die Erfindung betrifft außerdem die Polyisobutenyl(thio)ether, die nach dem obigen Verfahren erhältlich sind.

Das erfindungsgemäße Verfahren kann zu vielfältigen Zwecken Anwendung finden, z. B. zur Vernetzung telecheler oder sternförmiger Polyisobutenepoxide, entweder durch direkte Reaktion der terminalen Epoxidgruppen miteinander und/oder durch Reaktion der terminalen Epoxidgruppen mit zugesetzten Poly(thi)olen; zur Funktionalisierung oder Modifizierung von kationisch polymerisierbaren Epoxyharzen mit Polyisobutenylresten, wobei Poly(thi)ole als Härtungsmittel anwesend sein können; oder zur Herstellung von Polyisobutenylether(thio)alkoholen, die z. B. als Starter zur Herstellung von Polyoxyalkylenoxiden dienen.

Die Lewis-saure Verbindung ist im Allgemeinen unter Halogeniden und Sulfonaten, wie den Triflaten, des Bors, Aluminiums, Galliums, Antimons, Titans, Zinns, Vanadiums, Eisens und der Seltenerdmetalle ausgwählt. Im Falle des Aluminiums kommen auch die Monoalkylaluminiumdichloride oder Dialkylaluminiumchloride in Betracht. Bortrifluorid, Bortrichlorid, Aluminiumchlorid, Eisentrichlorid und Titantetrachlorid sind bevorzugt. Ebenso können Komplexe der Lewis-Säuren mit Ethern, Phenolen oder Alkoholen, z.B. BF₃.2 C₆H₅OH oder BF₃.2 (C₂H₅₎₂O, eingesetzt werden.

Kationische Photoinitiatoren sind bekannt und werden z. B. zur Härtung von Epoxyharzen eingesetzt. Typische kationische Photoinitiatoren sind Oniumsalze, Ferroceniumsalze oder Diazoniumsalze. Bevorzugte Oniumsalze sind unter Sulfonium- und Iodonium-Salzen ausgewählt, z. B. Triarylsulfoniumsalze oder Diaryliodoniumsalze. Die Gegenionen der Oniumsalze, Ferroceniumsalze oder Diazoniumsalze sind nicht-nucleophile Anionen, wie Tetrafluoroborat, Tetrakis(pentafluorphenyl)borat, Hexafluorophosphat oder Hexafluoroantimonat. Geeignete handelsübliche kationische Photoinitiatoren sind z. B. die folgenden

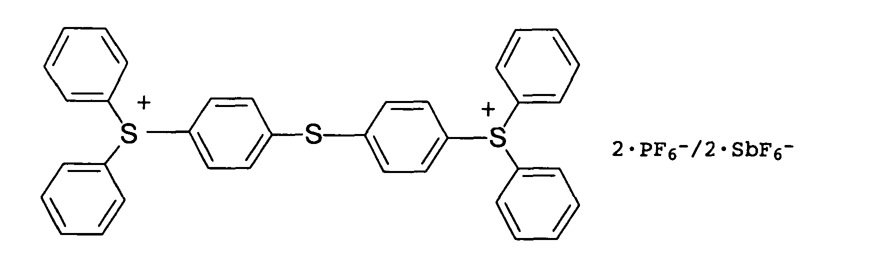

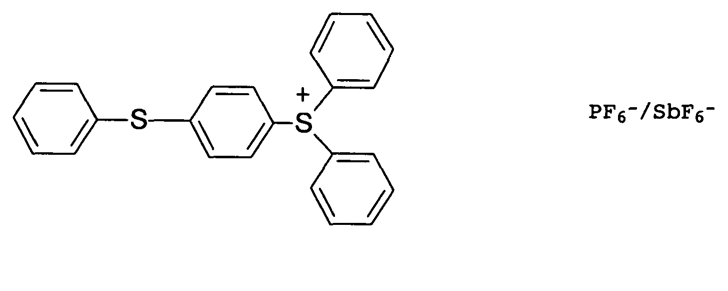

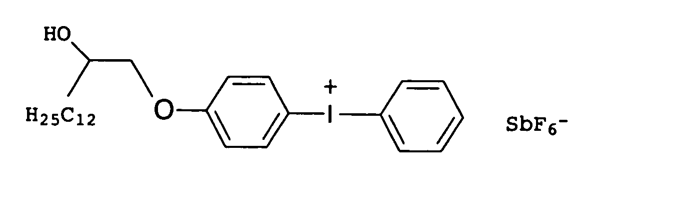

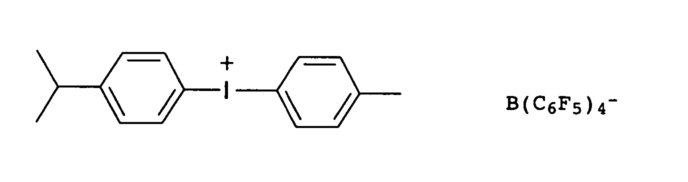

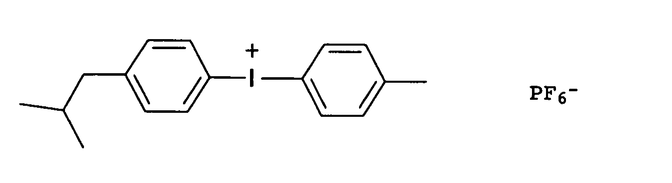

Unter Belichtung führen die Oniumsalze zur Bildung von Supersäuren, die die Ringöffnung des Polyisobutenepoxids katalysieren.

Die Belichtung kann mittels UV-Licht, sichtbarem Licht, Elektronenstrahl oder Gamma-Strahlung erfolgen. Hinsichtlich der Bedingungen sind im Allgemeinen diejenigen geeignet, die bei der kationischen Polymerisation von Epoxyharzen verwendet werden.

Polyisobutenepoxide mit terminalen Epoxidgruppen sind bekannt. Sie werden durch Epoxidierung von Polyisobutenen, die über terminale olefinische Doppelbindungen (z. B. in Gestalt von terminalen Allyl-, Vinyliden-, Dimethylvinyl- oder Cyclopentylgruppen) verfügen, mittels bekannter Epoxidierungsreagenzien, wie Peressigsäure, m-Chlorperbenzoesäure oder Hydroperoxiden, und gegebenfalls Epoxidierungskatalysatoren in einem inerten Lösungsmittel oder in Substanz erhalten, vgl. z.B. G. Dittius in Houbel-Weyl, Bd. 6/3, 4. Aufl., S. 385, G. Thieme Verlag Stuttgart 1965, oder D. Swern, Org. React. Vol. VII, 378 (1953). Die Epoxidierung eines Polyisobutens mittels m-Chlorperbenzoesäure ist von J. P. Kennedy et al., J. Polym. Sci.: Polym. Chem. Ed. Bd. 20, 2809 bis 2817 (1982) beschrieben. Die EP-A 0 476 485 beschreibt die Epoxidierung von Polyisobuten mit Peressigsäure oder tert-Butylhydroperoxid. Sehr hohe Ausbeuten an Epoxid erhält man auch, indem man das Polyisobuten mit Hydroperoxiden, z. B. tert-Butylhydroperoxid, in Gegenwart von Übergangsmetallkatalysatoren, wie Molybdänoder Wolframsalzen oder -komplexen, umsetzt.

Die verwendeten Polyisobutene können nach bekannten Verfahren durch kationische Polymerisation von Isobuten erhalten werden, wobei nach Abbruch der Polymerkette im zuletzt eingebauten Monomeren eine Doppelbindung verbleibt, vgl. z. B. DE-A 27 02 604 und EP-A 0 145 235. Besonders vorteilhaft werden Polyisobutene aus einer BF₃-katalysierten Polymerisation eingesetzt, vgl. z. B. die EP-A 0 628 575. Sie enthalten einen hohen Anteil an Vinyliden-(-C(CH₃)=CH₂) und Dimethylvinyl- (-CH=C(CH₃)₂) Endgruppen.

Polyisobutene mit terminaler Unsättigung können auch durch lebende kationische Polymerisation von Isobuten hergestellt werden, wie sie z. B. in "Carbocationic Macromolecular Engineering", Kennedy and Ivan, Hauser Publishers, 1992, oder der EP-A 713 883 beschrieben ist. Die Polymerisation wird dabei durch geeignete Startermoleküle (Inifer), in der Regel organische tertiäre Halogenide wie z. B. meta- oder para-Dicumylchlorid, und eine LewisSäure wie z. B. Titantetrachlorid, initiiert. Das entstehende Halogen-terminierte Polymer kann durch Behandlung mit einer Base wie Kalium-tert-butylat oder durch thermische Behandlung dehydrohalogeniert werden, wobei sich an den Molekülenden Vinylidengruppen (-CH₂-C(CH₃)=CH₂) ausbilden. Alternativ kann man das Halogenterminierte Polymer mit Allyltrimethylsilan behandeln, wodurch die Molekülenden mit Allylgruppen (-CH₂-CH=CH₂) terminiert werden, wie dies in der EP-A 264 214 beschrieben ist. Der Inifer kann so gewählt werden, dass durch Anlagerung von Isobutenmolekülen Polymerketten in eine oder mehr als eine Richtung wachsen, so dass lineare oder sternförmige Polymere erhalten werden. Der Inifer ist im Allgemeinen ein Molekül der Formel 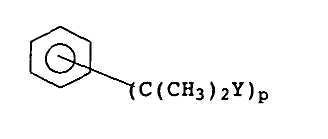 worin Y für Halogen, vorzugsweise Chlor oder Brom, C₁-C₆-Alkoxy oder C₁-C₆-Alkylcarbonyloxy steht und p für 1, 2 oder 3 steht.

Man auch ein umgekehrtes Aufbauprinzip anwenden und olefinisch ungesättigte Inifermoleküle verwenden, wie H₂C=CHC(CH₃)₂Cl oder 3-Chlorcyclopenten. Die lebenden Polymerketten können dann mittels geeigneter Kopplungsmittel gekoppelt werden, so dass telechele oder sternförmige Polymere mit olefinischer Unsättigung an den Molekülen erhalten werden. Geeignete Kopplingsmittel sind z. B. die folgenden: 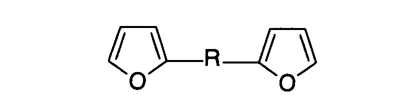 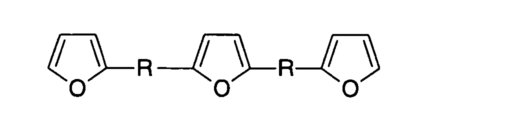 worin R für Methylen oder 2,2-Propandiyl steht; oder

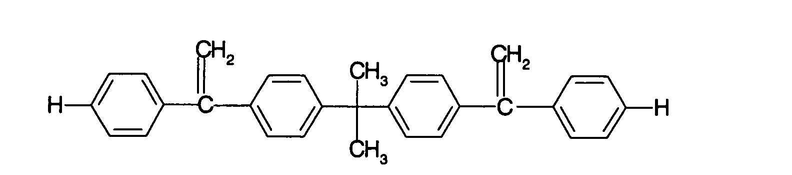

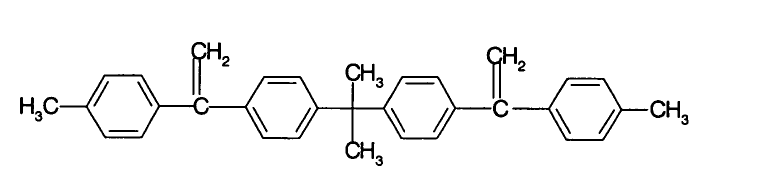

Eine Beschreibung geeigneter Kopplungsmittel findet sich in folgenden Literaturstellen; die Kopplungsreaktion kann in analoger Weise zu den dort beschriebenen Umsetzungen durchgeführt werden: R. Faust, S. Hadjikyriacou, Macromolecules 2000, 33, 730-733; R. Faust, S. Hadjikyriacou, Macromolecules 1999, 32, 6393-6399; R. Faust, S. Hadjikyriacou, Polym. Bull. 1999, 43, 121-128; R. Faust, Y. Bae, Macromolecules 1997, 30, 198; R. Faust, Y. Bae, Macromolecules 1998, 31, 2480; R. Storey, Maggio, Polymer Preprints 1998, 39, 327-328; W099/24480; US 5,690,861 und US 5,981,785.

Der verwendete Alkohol oder das Thiol unterliegen keinen besonderen Beschränkungen, wobei in der Regel Gruppen mit höherer Nukleophilie als die der Hydroxy- bzw. der Mercaptogruppe abwesend sind oder für die Umsetzung mit dem Polyisobutenepoxid geeignet geschützt werden. Der Alkohol oder das Thiol können beispielsweise die allgemeinen Formeln R³-OH oder R³-SH aufweisen, worin R³ für C₁-C₁₀₀-Alkyl, vorzugsweise C₁-C₁₈-Alkyl, das gegebenenfalls durch eine oder mehrere unter O und S ausgewählte Gruppen unterbrochen ist, C₇-C₁₈-Aralkyl, C₃-C₁₈-Alkenyl, C₆-C₁₂-Aryl, C₅-C₁₂-Cycloalkyl, in dem gegebenenfalls ein oder zwei Kohlenstoffatome durch O und/oder S ersetzt sind, Heterocyclyl oder Heterocyclyl-C₁-C₈-alkyl stehen. Die genannten Reste können einen oder mehrere, meist einen bis drei, unter Hydroxy, C₁-C₈-Alkoxy, Phenoxy, Halogenen, Nitro, Cyano, C₁-C₈-Alkylcarbonyl, C₁-C₈-Alkyloxycarbonyl, ausgewählte Substituenten tragen.

Heterocyclyl ist vorzugsweise ein fünf- bis sechsgliedriger, ein bis drei Sauerstoff-, Stickstoff- und/oder Schwefelatome aufweisender Heterocyclus, der gegebenenfalls benzanelliert ist, wie Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl. Heterocyclyl-C₁-C₈-alkyl ist beispielsweise Furfuryl.

Geeignete Alkohole sind z. B. Methanol, Ethanol, iso-Propanol, Fettalkohole, alkoxylierte Fettalkohole, Phenol, Benzylalkohol oder Furfurylalkohol.

Geeignete Thiole sind z. B. Thioglykolsäureester, Methylthiol, Ethylthiol, n-Propylthiol, t-Butylthiol, Cyclohexylthiol. Weitere geeignete Thiole finden sich in Ullmann's Encyclopedia of Industrial Chemistry im Kapitel "Thiols and Organic Sulfides".

In bestimmten Fällen sind Poly(thi)ole bevorzugt, d. h. Alkohole oder Thiole, die wenigstens zwei Hydroxyl- und/oder Mercaptogruppen umfassen, wie Ethylenglykol, Diethylenglykol, höhere Poly(oxyethylen)glykole, Propan-1,2-diol, Poly(oxypropylen)glykole, Propan-1,3-diol, Butan-1,4-diol, Poly(oxytetramethylen)glykole, Pentan-1,5-diol, Hexan-1,6-diol, Hexan-2,4,6-triol, Glycerin, 1,1,1-Trimethylolpropan, Pentaerythritol, Sorbitol, polyalkoxyliertes Glycerin, polyalkoxyliertes Trimethylolpropan oder Umsetzungsprodukte von Caprolacton und Polyolen, oder mehrwertige Phenole wie Resorcin. Geeignet sind auch Alkohole oder Thiole, die ein polymeres Gerüst umfassen, das Hydroxyl- und/oder Mercaptogruppen enthaltende Seitenketten umfasst. Hierzu zählt z. B. ganz oder teilweise verseifter Polyvinylalkohol.

Der Alkohol bzw. das Thiol werden in der Regel in einer Menge von 0,75 bis 2,5 mol, gerechnet als Hydroxy- oder Mercaptogruppen pro mol Epoxidgruppen des Polyisobutenepoxids, oder in einem höheren Überschuss verwendet.

In Abwesenheit von Reaktionspartnern kann die Epoxidgruppe eines Polyisobutenepoxidmoleküls bei der Behandlung mit einer Lewis-sauren Verbindung oder vorzugsweise mit einem kationischen Photoinitiator unter Belichtung mit den Epoxidgruppen weiterer Polyisobutenepoxidmoleküle reagieren. Dieser Mechanismus kann zur Vernetzung telecheler oder sternförmiger Polyisobutenepoxide verwendet werden. In Gegenwart anderer Epoxide, gegebenenfalls in Kombination mit Poly(thi)olen als Epoxy-Härtungsmittel, erfolgt bei der Behandlung mit einer Lewis-sauren Verbindung oder vorzugsweise mit einem kationischen Photoinitiator unter Belichtung eine kationische Cooligomerisation. Dieser Mechanismus kann zur Eigenschaftsmodifizierung von Epoxyharzen verwendet werden.

Geeignete Epoxide sind aliphatische und cycloaliphatische Epoxide wie z. B. 1,2-Epoxydodecan, Epichlorhydrin, Isoamylenoxid, α-Pinenoxid, Styroloxid, epoxidiertes Sojaöl oder Limonenmonooxid.

Weiterhin eignen sich Epoxyverbindungen mit wenigstens zwei Epoxidgruppen im Molekül sowie deren durch Vorverlängerung entstandene Verlängerungsprodukte (Präpolymere für Epoxyharze, wie sie z. B. in Ullmann's Encyclopedia of Industrial Chemistry, 6th Edition, 2000, Electronic Release, im Kapitel "Epoxy Resins" beschrieben sind).

Zu Epoxyverbindungen mit wenigstens zwei Epoxidgruppen im Molekül zählen vor allem:
(i) Polyglycidyl- und Poly(β-methylglycidyl)ester, die erhältlich sind durch Umsetzung einer Verbindung mit wenigstens zwei Carboxylgruppen, wie einer aliphatischen oder aromatischen Polycarbonsäure, mit Epichlorhydrin oder β-Methylepichlorhydrin. Die Umsetzung erfolgt vorzugsweise in Gegenwart einer Base. Geeignete aliphatische Polycarbonsäuren sind Oxalsäure, Bernsteinsäure, Glutarsäure, Adipinsäure, Pimelinsäure, Azelainsäure, dimerisierte oder trimerisierte Linolensäure, Tetrahydrophthalsäure, Hexahydrophthalsäure oder 4-Methylhexahydrophthalsäure. Geeignete aromatische Polycarbonsäuren sind z. B. Phthalsäure, Isophthalsäure oder Terephthalsäure.
(ii) Polyglycidyl- oder Poly(β-methylglycidyl)ether, die sich z. B. von acyclischen Alkoholen, wie Ethylenglykol, Diethylenglykol, Poly(oxyethylen)glykolen, Propan-1,2-diol, Poly(oxypropylen)glykole, Propan-1,3-diol, Butan-1,4-diol, Poly(oxytetramethylen)glykole, Pentan-1,5-diol, Hexan-1,6-diol, Hexan-2,4,6-triol, Glycerin, 1,1,1-Trimethylolpropan, Pentaerythritol, Sorbitol; oder cyclischen Alkoholen wie 1,4-Cyclohexandimethanol, Bis(4-hydroxycyclohexyl)methan oder 2,2-Bis(4-hydroxycyclohexyl)propan ableiten; oder aromatische Kerne umfassen wie N,N-Bis(2-hydroxyethyl)anilin oder p,p-Bis(2-hydroxyethylamino)diphenylmethan.
   Die Glycidylether können sich auch von einkernigen Phenolen wie Resorcin oder Hydrochinon, oder mehrkernigen Phenolen, wie Bis(4-hydroxyphenyl)methan, 4,4'-Dihydroxybiphenyl Bis(4-hydroxyphenyl)sulfon, 1,1,2,2-Tetrakis(4-hydroxyphenyl)ethan, 2,2-Bis(4-hydroxyphenyl)propan, 2,2-Bis(3,5-dibrom-4-hydroxyphenyl)propan oder von Novolaken, die erhältlich sind durch Kondensation von Aldehyden wie Formaldehyd, Acetaldehyd, Chloral oder Furfural, mit Phenolen, wie Phenol, 4-Chlorphenol, 2-Methylphenol, 4-tert-Butylphenol, oder Bisphenolen.
(iii) Poly(N-glycidyl)-Verbindungen, die durch Dehydrochlorierung der Reaktionsprodukte von Epichlorhydrin mit Aminen erhältlich sind, die wenigstens zwei Amin-Wasserstoffatome aufweisen, wie Anilin, n-Butylamin, Bis(4-aminophenyl)methan, m-Xylylendiamin, oder Bis(4-methylaminophenyl)methan. Zu den Poly(N-glycidyl)-Verbindungen zählen auch Triglycidylisocyanurate, N,N'-Diglycidylderivate von Alkylenharnstoffen, wie Ethylenharnstoff oder 1,3-Propylenharnstoff and die Diglycidylderivate von Hydantoinen, wie 5,5-Dimethylhydantoin.
(iv) Poly(S-glycidyl)-Verbindungen wie Di-S-glycidylderivate, die sich von Dithiolen ableiten, wie Ethan-1,2-dithiol oder Bis(4-mercaptomethylphenyl)ether.
(v) Cycloaliphatische Epoxy-Verbindungen, wie Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3',4'-epoxycyclohexancarboxylat; oder gemischte cycloaliphatische-aliphatische Epoxy-Verbindungen wie Limonendiepoxid.

Das molare Verhältnis von Polyisobutenepoxid zu davon verschiedenem Epoxid kann in weiten Bereichen variiert werden und liegt z. B. im Bereich von 1:99 bis 95:5, vorzugsweise 5:95 bis 50:50, jeweils gerechnet als Epoxidgruppenäquivalente.

Die Struktur der erhaltenen Umsetzungsprodukte kann am Beispiel des Umsetzungsprodukts eines Polyisobutenepoxids der Formel Ia und eines Epoxids der Formell II 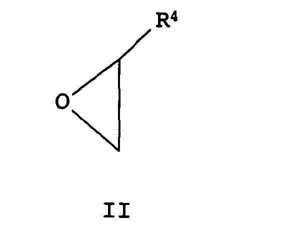 wie folgt veranschaulicht werden: 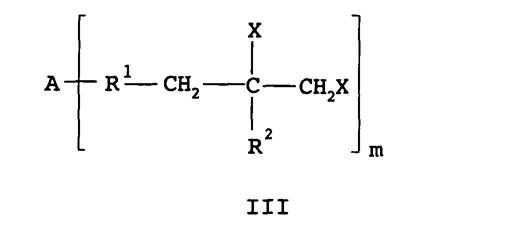 worin einer der Reste X für OH steht und der andere Rest X für einen Rest der Formel 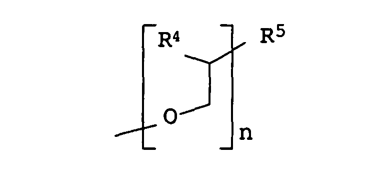 steht, worin A, R¹, R² und m die bereits angegebene Bedeutung haben, R⁴ für den Rest des Epoxids und R⁵ für eine terminierende Gruppe, z. B. Fluor, Hydroxy oder OR³ (worin R³ die weiter oben angegebene Bedeutung hat), steht und n für eine ganze Zahl steht und z. B. im Bereich von 1 bis 20 liegt.

Das erfindungsgemäße Verfahren kann in Substanz bzw. einem Überschuss des verwendeten Alkohols oder einem Lösungsmittel durchgeführt werden, das unter den Reaktionsbedingungen inert ist. Geeignete Lösungsmittel sind beispielsweise acyclische Ether wie Diethylether, Methyl-tert-butylether, Dimethoxyethan, Diethylenglykoldimethylether, Triethylenglykoldimethylether, cyclische Ether wie Tetrahydrofuran oder Dioxan sowie aliphatische oder aromatische Kohlenwasserstoffe wie Hexan oder Toluol oder Gemische davon. Alternativ sind Lösungsmittel geeignet, die an der kationischen Polymerisation teilnehmen, wie Propylencarbonat. Die Reaktionstemperatur liegt normalerweise zwischen dem Schmelz- und Siedepunkt des Reaktionsgemisches, vorzugsweise im Bereich von 0 bis 140 °C, insbesondere 15 bis 80 °C.

Eine Ausführungsform der Erfindung ist eine härtbare Zusammensetzung, die ein wenigstens eine terminale Epoxidgruppe aufweisendes Polyisobutenepoxid, ein davon verschiedenes Epoxid, vorzugsweise eine Epoxyverbindung mit wenigstens zwei Epoxidgruppen im Molekül, und gegebenenfalls ein Poly(thi)ol umfasst. Zur Härtung wird die Zusammensetzung mit einer Lewis-sauren Verbindung in Kontakt gebracht. Alternativ enthält die Zusammensetzung einen kationischen Photoinitiator, wobei die Härtung der Zusammensetzung durch Belichtung erfolgt. Die härtbare Zusammensetzung kann in üblicher Weise Hilfsstoffe, z. B. mineralische oder faserförmige Füllstoffe, wie Calciumcarbonat, Glimmer, Kaolin, Aluminiumoxid, Ruß, Kieselsäure, Kohlefasern, Glasfasern oder textile Fasern.

Die erhaltenen Polyisobutenyl(thio)ether eignen sich für viele Anwendungen, z. B. als Makromere, Kleb- und Dichtmassen oder Starter für Polyalkylenoxide.

Die Erfindung wird durch das folgende Beispiel näher veranschaulicht.

### Beispiel

In einem 500 ml-Vierhalskolben wurden 30 g Polyisobutenylepoxid (Mn etwa 1000) und 150 ml Methanol vorgelegt. Unter kräftigem Rühren gab man 1 ml Bortrifluorid-Etherat dazu und hielt das Reaktionsgemisch 3 Stunden bei 50 °C. Dann versetzte man mit 250 ml Hexan und brach die Umsetzung durch Zugabe von 10 ml 25%-igem Ammoniakwasser ab. Die Hexanphase wurde abgetrennt, über Natriumsulfat getrocknet und am Rotationsverdampfer bei 160 °C und 5 mbar vom Lösungsmittel befreit. Man erhielt 36,7 g eines hellen Öls.

IR: v_{C-O-C}=1074cm⁻¹. Anhand des ¹H-NMR-Spektrums konnte man fesstellen, dass das Reaktionsprodukt zu etwa 70 % aus Methoxy-hydroxy-Polyisobuten (R-CH₂-C(CH₃)(OCH₃)-CH₂-OH) bestand.

## Patentansprüche

1. Verfahren zur Herstellung von Polyisobutenyl(thio)ethern durch Umsetzung eines wenigstens eine terminale Epoxidgruppe aufweisenden Polyisobutenepoxids mit
i) sich selbst,
ii) anderen Epoxiden, und/oder
iii) unter Alkoholen und Thiolen ausgewählten Nucleophilen,
unter Katalyse
a) einer Lewis-sauren Verbindung, und/oder
b) eines kationischen Photoinitiators unter Belichtung.

2. Verfahren nach Anspruch 1, wobei das Polyisobutenepoxid eine der Formeln Ia bis Id aufweist 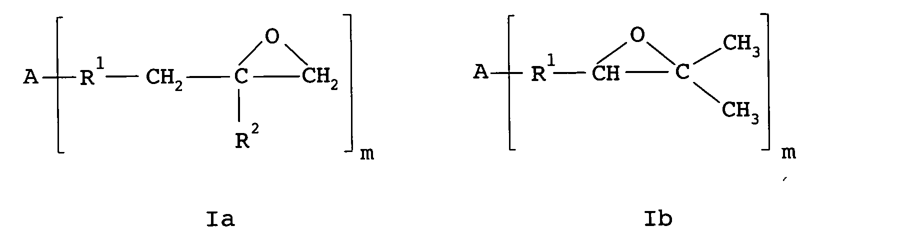 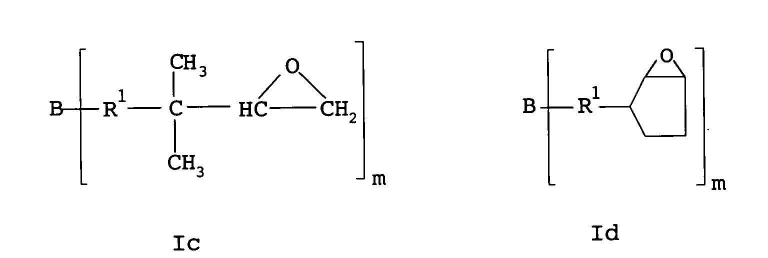 worin A für Wasserstoff oder den Rest eines Inifermoleküls steht, B für Chlor oder den Rest eines Kopplungsmittels steht, R¹ für eine Isobuteneinheiten aufweisende Kette steht, R² für Wasserstoff oder Methyl steht und m für eine ganze Zahl von 1 bis 6, vorzugsweise 1, 2 oder 3, steht.

3. Verfahren nach Anspruch 1 oder 2, wobei die Lewis-saure Verbindung unter Halogeniden und Sulfonaten des Bors, Aluminiums, Galliums, Antimons, Titans, Zinns, Vanadiums, Eisens und der Seltenerdmetalle ausgewählt ist.

4. Verfahren nach Anspruch 3, wobei die Lewis-saure Verbindung unter Bortrifluorid, Bortrichlorid, Aluminiumchlorid, Eisentrichlorid und Titantetrachlorid ausgewählt ist.

5. Verfahren nach Anspruch 1 oder 2, wobei der kationische Photoinitiator unter Sulfonium- und Iodonium-Salzen ausgewählt ist.

6. Verfahren nach einem der vorhergehenden Ansprüche, wobei der Alkohol oder das Thiol wenigstens zwei Hydroxyl- und/oder Mercaptogruppen umfasst.

7. Polyisobutenyl(thio)ether, erhältlich nach dem Verfahren nach einem der Ansprüche 1 bis 6.

8. Polyisobutenyl(thio)ether nach Anspruch 7, erhältlich aus einem Polyisobutenepoxid der Formel Id gemäß Anspruch 2.

9. Härtbare Zusammensetzung, umfassend
i) ein wenigstens eine terminale Epoxidgruppe aufweisendes Polyisobutenepoxid,
ii) ein davon verschiedenes Epoxid, und
iii) gegebenenfalls ein Poly(thi)ol.
